# EUROPÄISCHE PATENTANMELDUNG

(11) **EP 0 786 601 A1**
(43) Veröffentlichungstag der Anmeldung: **30.07.1997**
(21) Anmeldenummer: 96116925.7
(22) Anmeldetag: 22.10.1996
(51) Int. Cl.: F16B 19/00

(54) **Nagel**

(30) Priorität: 29.01.1996 DE 19603063; 10.02.1996 DE 19604924; 16.02.1996 DE 19605761
(71) Anmelder: fischerwerke Artur Fischer GmbH & Co. KG, D-72178 Waldachtal (DE)
(72) Erfinder: Fischer, Artur, Prof. Dr. h.c. Dr.-Ing. E.h., 72178 Waldachtal (DE)

(57) **Zusammenfassung**

Die Erfindung betrifft einen Nagel (10) mit einer Längskerbe (18), die in einem Spreizbereich (14) einen Schaft (12) eines Nagels (10) in zwei Spreizbacken unterteilt, wobei der Nagel (10) im Spreizbereich (14) quer zur Längskerbe (18) breiter als ein Durchmesser des Schafts (12) außerhalb des Spreizbereiches (14) ist. Um den Nagel (10) aus Kunststoff herstellen zu können, schlägt die Erfindung vor, den Nagel im Spreizbereich (14) quer zur Längskerbe (18) breiter und in einer Mittelebene der Längskerbe (18) weniger hoch als einen Bohrlochdurchmesser auszubilden und/oder den Spreizbereich (14) in Richtung eines hinteren Endes des Nagels (10) zu verschmälern und/oder die Längskerbe (18) zum vorderen Ende des Nagels (10) hin zu verbreitern. Beide Maßnahmen verringern die Stauchneigung des Nagels (10) beim Eintreiben in ein Bohrloch. Es wird verhindert, daß die notwendige Eintreibkraft durch Stauchen des Nagels (10) stark ansteigt, wodurch der Nagel (10) zerstört werden kann.

## Beschreibung

Die Erfindung betrifft einen Nagel zum Eintreiben in ein Bohrloch in einem Mauerwerk gemäß dem Oberbegriff des Anspruchs 1.

Aus der P 43 31 583.6 ist ein derartiger, aus Metall bestehender Nagel bekannt. Der bekannte Nagel weist einen Spreizbereich in seinem vorderen Bereich auf, der von einer Längsnut durchzogen ist, die einen Schaft des Nagels im Spreizbereich in zwei in Längsrichtung verlaufende Spreizbacken unterteilt. Im Spreizbereich ist der bekannte Nagel im Querschnitt annähernd kreisrund. Eine Abmessung quer zum Nagel und quer zur Längskerbe hat Übermaß gegenüber einem Bohrlochdurchmesser, wogegen eine Querabmessung des Nagels in Richtung einer Mittelebene der Längskerbe in etwa mit dem Bohrlochdurchmesser übereinstimmt.

Beim Eintreiben in das Bohrloch wird der Nagel in seinem Spreizbereich elastisch verformt, seine Spreizbacken werden zueinander gedrückt und die Längskerbe verschmälert. Die Spreizbacken drücken in einer Querrichtung des Nagels quer zur Längskerbe gegen eine Bohrlochwandung und halten den Nagel durch Reibschluß im Bohrloch.

Soll der bekannte Nagel aus Kunststoff hergestellt werden muß er ein ausreichendes Übermaß im Spreizbereich aufweisen, um mit dem Metallnagel vergleichbare Haltekräfte im Bohrloch zu haben. Beim Eintreiben in das Bohrloch tritt dann das Problem auf, daß der Nagel gestaucht wird, wodurch sich seine Querabmessung vergrößert und sein Eintreibwiderstand ganz erheblich ansteigt. Zusätzlich wird durch das Zusammendrücken der Spreizbacken beim Eintreiben in das Bohrloch der Nagel im Bereich eines Grundes seiner Längskerbe gegen die Bohrlochwandung gedrückt, wodurch er sich im Bohrloch verklemmt und den Eintreibwiderstand weiter erhöht. Das Ansteigen des Eintreibwiderstandes kann bis zur Beschädigung und Zerstörung des Nagels führen.

Der Erfindung liegt daher die Aufgabe zugrunde, einen Nagel der eingangs genannten Art so auszubilden, daß er sich problemlos ein ein Bohrloch eintreiben läßt und eine große Haltekraft im Bohrloch aufweist.

Diese Aufgabe wird erfindungsgemäß durch die Merkmale des Anspruchs 1 gelöst. Der erfindungsgemäße Nagel besteht aus Kunststoff. Er hat geringes Gewicht und ist preiswert herstellbar. Er ist korrosionsbeständig und thermisch isolierend, bildet also keinen Kälteleiter. Die hohe Elastizität des Kunststoff ermöglicht ein größeres Übermaß als ein Metallnagel.

Im Spreizbereich hat eine Querabmessung des erfindungsgemäßen Nagels in Richtung einer Mittelebene seiner Längskerbe ein Untermaß zum Bohrlochdurchmesser. Durch ein verhältnismäßig großes Übermaß quer zur Längskerbe ist die elastische Verformung im Spreizbereich des Nagels groß. Durch die Herstellung des Nagels aus Kunststoff ist eine derart große elastische Verformung möglich. Sie bewirkt mit dem Metallnagel vergleichbare Haltekräfte im Bohrloch. Das Untermaß im Spreizbereich des erfindungsgemäßen Nagels in der Mittelebene seiner Längskerbe, also quer zu der Richtung, in der der Nagel ein Übermaß aufweist, liegt der erfindungsgemäße Nagel im Bereich des Grundes seiner Längskerbe nicht oder nur mit wenig Druck an der Bohrlochwandung an, d.h. er verklemmt sich nicht bei Eintreiben im Bohrloch und läßt sich zerstörungsfrei mit gewohnter Kraft eintreiben. Dabei wird der Nagel so ausgebildet, daß er auch in einem weiten Bohrloch an einer oberen Toleranzgrenze ausreichende Haltekraft hat und sich ohne weiteres in ein enges Bohrloch an einer unteren Toleranzgrenze ohne weiteres eintreiben läßt. Die große elastische Verformung des erfindungsgemäßen Nagels im Bohrloch bewirkt, daß die Spreizkraft, mit der die Spreizbacken gegen die Bohrlochwandung drücken, und damit die Halte- und die Eintreibkraft, sich nur wenig mit Durchmessertoleranzen des Bohrlochs ändern und selbst bei Bohrlocherweiterung beispielsweise durch Rißbildung die Haltekraft nur wenig zurückgeht.

Der erfindungsgemäße Nagel weist eine Längskerbe auf, die sich im Spreizbereich in Richtung eines vorderen Endes des Nagels vergrößert, d. h. sie wird breiter und/oder tiefer. In seinem Spreizbereich läßt sich der erfindungsgemäße Nagel zu seinem vorderen Ende hin mit geringerer Kraft zusammendrücken, der vordere Bereich setzt dem Eintreiben in ein Bohrloch geringeren Widerstand entgegen. Ein Stauchen des Nagels wird dadurch vermieden. Trotzdem weist der erfindungsgemäße Nagel eine dem bekannten Metallnagel vergleichbare Haltekraft im Bohrloch auf. Derselbe Effekt wird dadurch erzielt, daß sich der Nagel in seinem Spreizbereich in Richtung seines hinteren Endes verschmälert. Beide Maßnahmen können einzeln für sich oder gemeinsam an einem erfindungsgemäßen Nagel verwirklicht sein.

Der erfindungsgemäße Nagel hat den Vorteil, daß er eine einem Metallnagel vergleichbare Haltekraft aufweist. Aufgrund seiner Elastizität ist er wiederverwendbar und hat ein gutes Nachspreizverhalten, so daß eine Bohrlocherweiterung beispielsweise infolge von Rißbildung im Mauerwerk seine Haltekraft nur wenig verringert.

Vorzugsweise geht die Längskerbe tiefer als bis zur Längsmittelachse des Schafts.

Bei einer Ausgestaltung der Erfindung verbreitert sich der Schaft im Spreizbereich um 10 % oder mehr gegenüber dem Schaft außerhalb des Spreizbereichs, um eine hohe Haltekraft im Bohrloch zu erzielen.

Zur Erhöhung der Haltekraft kann die Oberfläche des erfindungsgemäßen Nagels im Spreizbereich aufgerauht sein oder der Nagel kann im Spreizbereich eine Verzahnung aufweisen. Diese Verzahnung befindet sich dort, wo die Spreizbacken gegen die Bohrlochwandung drücken, stehen also etwa quer zur Längskerbe vom Nagel ab. Die Verzahnung kann selbstverständlich auch zusätzlich an anderer Stelle des Nagels, beispielsweise umlaufend ausgebildet sein.

Bevorzugt verjüngt sich die Längskerbe in Richtung eines Kerbgrunds unter einem Winkel von etwa 10° bis 15°, wobei der Kerbgrund zur Vermeidung von Rißbildung gerundet ausgeführt ist.

Die Längskerbe dient auch zur Aufnahme von im Bohrloch vorhandenen Bohrmehl. Um den Eintritt von Bohrmehl in die Längskerbe zu erleichtern, erweitert sich die Längskerbe bei einer Ausführungsform der Erfindung am vorderen Ende des Nagels.

Das hintere Ende des erfindungsgemäßen Nagel kann einen Nagelkopf, einen Haken, ein Gewinde oder eine sonstige Befestigungseinrichtung aufweisen. Um eine möglichst hohe Festigkeit des Nagelkopfs zu erreichen, ist der Übergang vom Schaft zum Nagelkopf kontinuierlich ausgebildet, d. h. im Übergangsbereich erweitert sich der Nagel stetig vom Schaftdurchmesser auf nahezu den Kopfdurchmesser. Dadurch wird nicht nur eine Rißbildung am Übergang vom Kopf zum Schaft vermieden, die zum Abreißen des Kopfs führen würde, sondern eine am Kopf angreifende Kraft sehr gleichmäßig und über die gesamte Kopffläche verteilt in den Schaft eingeleitet.

Eine weitere Erhöhung der Festigkeit des Kopfes ergibt eine konvexe, beispielsweise ballige Ausbildung einer Stirnfläche des Kopfes. Dies verhindert ein Umbiegen eines Randbereichs des Kopfes unter Belastung. Der kontinuierliche Übergang vom Schaft zum Kopf und die konvexe Ausbildung der Außenseite des Kopfes führen zusammen zu einer Erhöhung der Kraftaufnahmefähigkeit des Kopfes um bis zu 50 %. Damit vermag der erfindungsgemäße Nagel einem Metallnagel vergleichbare Lasten aufzunehmen.

Vorzugsweise besteht der Nagel aus einem glasfaserverstärkten Kunststoff wie Polyamid (wie beispielsweise unter der Markenbezeichnung Grivory angeboten) oder Polyoximethylen (POM, wie es beispielsweise unter der Markenbezeichnung Hostaform angeboten wird).

In bevorzugter Ausgestaltung weist der erfindungsgemäße Nagel einen Steg in seinem Spreizbereich auf, der im Bereich des Kerbgrundes radial vom Umfang des Nagels abstehend angeordnet ist und in Längsrichtung des Nagels verläuft. Der Steg beginnt am vorderen Ende des Spreizbereichs, von wo ab sich der Nagel nach vorn zuspitzt, oder weiter hinten. Bei einer Weiterbildung der Erfindung ist der Steg keilförmig ausgebildet, er verringert seine Höhe nach vorn. Diese Ausgestaltung der Erfindung hat den Vorteil einer erhöhten Haltekraft im Bohrloch ohne den Eintreibwiderstand wesentlich zu vergrößern.

Eine Ausgestaltung des erfindungsgemäßen Nagels weist eine Lochscheibe unter dem Kopf des Nagels auf. Diese ist der Unterseite des Kopfs angepaßt geformt und weist eine Planfläche an ihrer dem Kopf abgewandten Stirnseite auf. Ein Loch der Lochscheibe hat vorzugsweise die Form des größten Querschnitts des Nagels in seinem Spreizbereich, damit sie sich auf den Nagel aufstecken läßt. Die Lochscheibe bewirkt eine gleichmäßige und großflächige Krafteinleitung von einem mit dem Nagel zu befestigenden Teil in den Kopf des Nagels.

Eine Weiterbildung des erfindungsgemäßen Nagels ist zumindest im Kopfbereich, in dem der in einem Bohrloch eingetriebene Nagel Licht ausgesetzt sein kann, gegen Lichteinstrahlung geschützt, um eine Versprödung und Alterung des Nagels durch Einwirkung von UV-Licht zu verhindern. Dies kann beispielsweise durch eine lichtundurchläßige Beschichtung erfolgen. Bei einer Ausführungsform ist eine korrosions- und UV-Licht-beständige Abdeckkappe auf dem Kopf des Nagels angebracht. Dies kann beispielsweise durch eine Klemm-, eine Rast- oder eine Schnappverbindung erfolgen. Bei einer Ausgestaltung der Erfindung greift die Abdeckkappe unterhalb des Kopfs radial nach innen in die Fase der Lochscheibe an deren dem Kopf des Nagels abgewandter Stirnseite ein, wodurch die Abdeckkappe und die Lochscheibe am Kopf des Nagels fixiert sind.

Die Erfindung wird nachfolgend anhand eines in der Zeichnung dargestellten Ausführungsbeispiels näher erläutert. Es zeigen:
- Figur 1: einen erfindungsgemäßen Nagel in Ansicht;
- Figur 2: den Nagel aus Figur 1 in um 90° gedrehter Darstellung;
- Figur 3: einen Querschnitt durch den Nagel entlang Linie III in Figur 1;
- Figur 4: eine zweite Ausführungsform eines erfindungsgemäßen Nagels; und
- Figur 5: eine Weiterbildung des in Figuren 1 - 3 dargestellten Nagels gemäß der Erfindung.

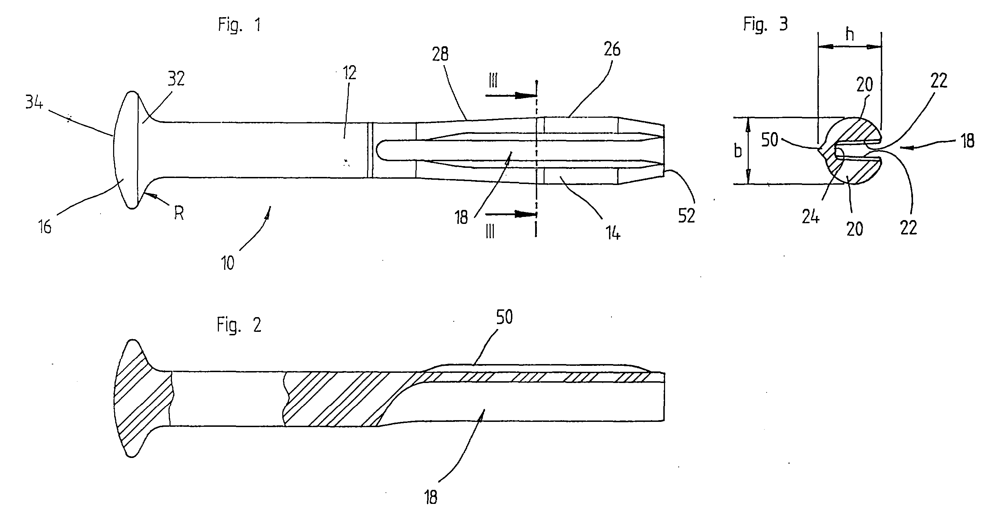

Der in Figuren 1 bis 3 dargestellte, erfindungsgemäße Nagel 10 weist einen Schaft 12 auf, der sich etwa in seiner vorderen Hälfte zu einem Spreizbereich 14 verbreitert und der an seinem hinteren Ende einen mit ihm einstückigen Kopf 16 aufweist. Im Spreizbereich 14 ist der Schaft 12 des Nagels 10 unrund, seine im folgenden Breite b genannte Querabmessung quer zu einer den Spreizbereich 14 längs durchziehenden Längskerbe 18 ist größer als seine im folgenden Höhe h genannte Querabmessung rechtwinklig dazu, was in Figur 3 zu sehen ist. Die Breite b ist um mehr als 10 % größer als der Durchmesser des Schafts 12 außerhalb des Spreizbereichs 14. Die Breite b hat Übermaß gegenüber einem Bohrloch, in das der Nagel 10 einzutreiben ist, wogegen die Höhe h ein Untermaß aufweist. Und zwar müssen ausreichendes Übermaß und Untermaß beim weitesten und auch im engsten, noch in einem Toleranzbereich liegenden Bohrloch vorhanden sein. Um den Nagel 10 auch in der Zugzone verwenden zu können, muß die Breite b ein so großes Übermaß haben, daß auch bei einer Bohrlocherweiterung beispielsweise infolge von Rißbildung die Haltekraft genügend groß bleibt.

Die Längskerbe 18 teilt den Spreizbereich 14 des Nagels 10 in zwei Spreizbacken 20, die beim Eintreiben des Nagels 10 in ein nicht dargestelltes Bohrloch durch elastische Verformung zueinander gedrückt werden und den Nagel 10 im Bohrloch festklemmen. Die Längskerbe 18 ist im Querschnitt V-förmig, ihre Wangenflächen 22 stehen in einem Winkel zueinander. Dabei hat sich ein Winkel von etwa 10° bis 15° als günstig für das Spreizverhalten der Spreizbacken 20 erwiesen. Ein Kerbgrund 24 ist gerundet ausgebildet.

Während die Breite b des Nagels 10 über einen vorderen Teil 26 des Spreizbereichs 14 konstant ist, verschmälert sich der Nagel 10 in einem hinteren Teil 28 des Spreizbereichs 14 (Figur 1). Zusätzlich verbreitert sich die Längskerbe 18 über die Länge des Spreizbereichs 14 in Richtung des vorderen Ende des Nagels 10, was in der Zeichnung allerdings nicht erkennbar ist. Sowohl die Verschmälerung des Spreizbereichs 14 in seinem hinteren Teil 28 als auch die Verbreiterung der Längskerbe 18 zum vorderen Ende des Nagels 10 hin wirken einem Stauchen des Nagels 10 beim Eintreiben in ein Bohrloch entgegen, so daß ein Eintreiben in ein Bohrloch problemlos möglich ist.

Zur Erhöhung der Haltekraft kann eine Oberfläche des Nagels 10 im Spreizbereich 14 aufgerauht sein.

Am vorderen Ende des Nagels 10 ist die Längskerbe 18 offen, sie verbreitert sich dort trichterartig.

Ein Übergang 32 vom Schaft 12 zum Kopf 16 ist umlaufend um den Nagel 10 sich konkav mit einem (nicht notwendig gleichbleibenden) Radius R gewölbt erweiternd ausgebildet. Der Übergang 32 erweitert sich kontinuierlich auf nahezu den Durchmesser des Kopfes 16.

Eine Stirnfläche 34 des Kopfes 16 ist ballig ausgebildet.

Der in Figuren 1 bis 3 dargestellte Nagel 10 weist einen Schaftdurchmesser außerhalb des Spreizbereichs 14 von 5,6 mm auf. Sein Spreizbereich 14 ist maximal 6,9 mm breit. Der Nagel 10 ist zum Eintreiben in ein Bohrloch mit einem Nenndurchmesser von 6 mm vorgesehen.

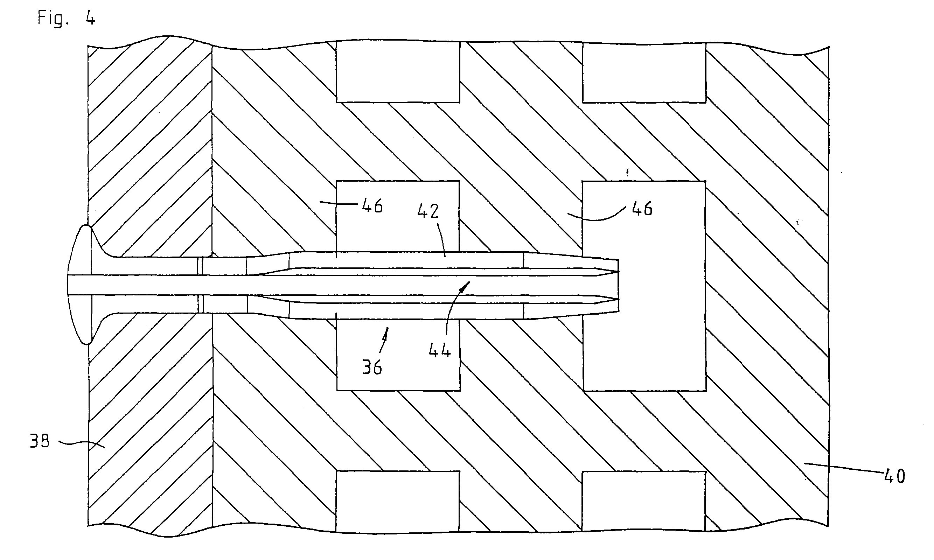

Der in Figur 4 dargestellte, erfindungsgemäße Nagel 36 ist durch eine Platte 38 in einen Hohlblockstein 40 eingetrieben. Bei ihm erstreckt sich ein Spreizbereich 42 nahezu und eine Längskerbe 44 über seine gesamte Länge, um sicherzustellen, daß er in Wandungen 46 des Hohlblocksteins 40 Halt findet. Im übrigen ist der in Figur 4 dargestellte Nagel 36 wie der in Figuren 1 bis 3 dargestellte Nagel 10 aufgebaut. Zur Vermeidung von Wiederholungen werden die Ausführungen zu Figuren 1 bis 3 in Bezug genommen.

Der in der Zeichnung dargestellte Nagel 10, 36 besteht aus einem glasfaserverstärkten Kunststoff, beispielsweise aus glasfaserverstärktem Polyamid, insbesondere aus glasfaserverstärktem, teilaromatischem Polyamid.

Der erfindungsgemäße Nagel 10 weist einen in seiner Längsrichtung verlaufenden Steg 50 in seinem Spreizbereich 14 auf. Der Steg 50 beginnt hinter einem vorderen Ende 52 des Spreizbereichs 14. Er ist radial von einem Umfang des Nagels 10 abstehend im Bereich des Kerbgrundes 24 angeordnet und keilförmig ausgebildet, d. h. seine Höhe in radialer Richtung des Nagels 10 nimmt über seine Länge zum Kopfende des Nagels 10 hin zu.

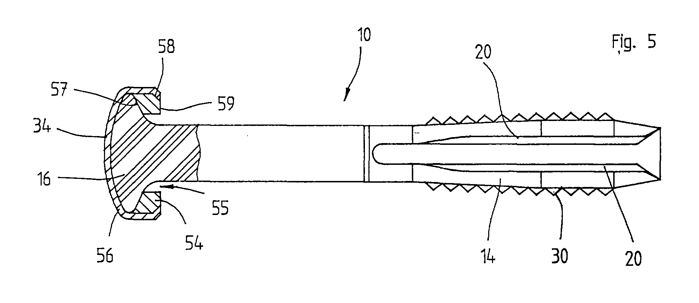

Unter dem Kopf 16 des in Figur 5 dargestellten, erfindungsgemäßen Nagels 10 ist eine Lochscheibe 54 angeordnet, die vorzugsweise aus korrosionsbeständigem A4-Stahl besteht. Das Loch 55 der Lochscheibe 54 hat die Form des größten Querschnitts des Nagels 10 in seinem Spreizbereich. Eine dem Kopf 16 des Nagels 10 zugewandte Stirnfläche 57 der Lochscheibe 54 ist komplementär zur Unterseite des Kopfs 16 geformt, so daß die Lochscheibe 54 über ihre gesamte Stirnfläche 57 am Kopf 16 des Nagels 10 anliegt. Eine dem Kopf 16 abgewandte Stirnfläche 59 der Lochscheibe 54 ist eben. Die Lochscheibe 54 weist eine Fase 58 am Außenumfang der dem Kopf 16 abgewandten Stirnfläche 59 auf.

Zum Schutz gegen UV-Licht ist auf dem Kopf 16 eine Abdeckkappe 56 angebracht, die als topfförmiges Tiefziehteil aus A4-Stahl hergestellt ist. Die Abdeckkappe 56 liegt paßgenau an der balligen Stirnfläche 34 des Kopfs 16 an. Sie reicht den Kopf 16 umschließend unter dessen Unterseite und ist durch Umbördeln ihres freien Randes radial nach innen in die Fase 58 der Lochscheibe 54 hineinverformt, wo sie mit der dem Kopf 16 abgewandten Stirnfläche 59 der Lochscheibe 54 bündig abschließt.

Auf diese Weise sind die Abdeckkappe 56 und die Lochscheibe 54 am Kopf 16 des Nagels 10 fixiert. Anstelle einer Aufrauhung, bzw. einer glatten Außenfläche des Spreizbereichs 14 weist die Ausführungsform des Nagels 10 gemäß Figur 5 eine Verzahnung 30 im Seitenbereich seiner Spreizbacken 20 auf.

## Patentansprüche

1. Nagel zum Eintreiben in ein Bohrloch in einem Mauerwerk, mit einem Schaft, mit einer Befestigungseinrichtung an einem hinteren Schaftende und mit einem sich in Längsrichtung des Schafts erstreckenden Spreizbereich, über den sich eine Längskerbe erstreckt, die den Schaft in zwei in Längsrichtung verlaufende Spreizbacken unterteilt, wobei im Spreizbereich eine Abmessung des Nagels in einer Querrichtung zum Schaft und quer zur Längskerbe größer als ein Bohrlochdurchmesser ist, **dadurch gekennzeichnet**, daß der Nagel (10, 36) aus Kunststoff besteht, und daß eine Abmessung in einer Querrichtung zum Schaft (12) und in einer Mittelebene der Längskerbe (18, 44) kleiner als ein Bohrlochdurchmesser ist.

2. Nagel nach Anspruch 1, **dadurch gekennzeichnet**, daß sich eine Querschnittsfläche der Längskerbe (18, 44) im Spreizbereich (14, 42) in Richtung eines vorderen Endes des Nagels (10, 36) vergrößert.

3. Nagel nach Anspruch 1, **dadurch gekennzeichnet**, daß die Längskerbe (18) tiefer als der halbe Durchmesser des Schafts (12) ist.

4. Nagel nach Anspruch 1, **dadurch gekennzeichnet**, daß sich die Abmessung (b) des Nagels (10, 36) in der Querrichtung des Schafts (12) und quer zur Längskerbe (18, 44) im Spreizbereich (14, 42) in Richtung des hinteren Schaftendes verkleinert.

5. Nagel nach Anspruch 4, **dadurch gekennzeichnet**, daß die größte Abmessung (b) des Nagels (10, 36) im Spreizbereich (14, 42) in der Querrichtung des Schafts (12) und quer zur Längskerbe (18, 44) mindestens 10 % größer als ein Schaftdurchmesser außerhalb des Spreizbereichs (14, 42) ist.

6. Nagel nach Anspruch 1, **dadurch gekennzeichnet**, daß er eine aufgerauhte Oberfläche im Spreizbereich (14, 42) hat.

7. Nagel nach Anspruch 1, **dadurch gekennzeichnet**, daß er eine Verzahnung (30) im Seitenbereich des Spreizbereichs (14, 42) aufweist.

8. Nagel nach Anspruch 1, **dadurch gekennzeichnet**, daß die Längskerbe (18) V-förmigen Querschnitt mit vorzugsweise gerundeten Kerbgrund aufweist.

9. Nagel nach Anspruch 1, **dadurch gekennzeichnet**, daß die Längskerbe (18, 44) am vorderen Ende des Nagels (10, 36) offen ist und sich zum vorderen Ende des Nagels (10, 36) hin erweitert.

10. Nagel nach Anspruch 1, **dadurch gekennzeichnet**, daß er einen Kopf (16) als Befestigungseinrichtung aufweist.

11. Nagel nach Anspruch 10, **dadurch gekennzeichnet**, daß er einen kontinuierlichen Übergang (32) vom Schaft (12) zum Kopf (16) aufweist.

12. Nagel nach Anspruch 10, **dadurch gekennzeichnet**, daß eine Stirnfläche (34) des Kopfs (32) konvex, vorzugsweise ballig ausgebildet ist.

13. Nagel nach Anspruch 1, **dadurch gekennzeichnet**, daß der Nagel (10, 36) aus einem glasfaserverstärkten Kunststoff besteht.

14. Nagel nach Anspruch 1, **dadurch gekennzeichnet**, daß er einen Steg (50) in seinem Spreizbereich (14) aufweist, der in Längsrichtung des Nagels (10) verläuft, der im Bereich des Kerbgrundes (24) an einem Außenumfang des Nagels (10) angeordnet ist und der an einem vorderen Ende (52) des Spreizbereichs (14) oder weiter hinten beginnt.

15. Nagel nach Anspruch 14, **dadurch gekennzeichnet**, daß der Steg (50) zumindest über einen Teil seiner Länge keilförmig mit sich nach vorne verringernder Höhe ausgebildet ist.

16. Nagel nach Anspruch 10, **dadurch gekennzeichnet**, daß er eine Lochscheibe (54) unter seinem Kopf (16) aufweist.

17. Nagel nach Anspruch 16, **dadurch gekennzeichnet**, daß er eine gegen UV-Licht und gegen Korrosion beständige Abdeckkappe (56) auf seinem Kopf (16) aufweist.

18. Nagel nach Anspruch 17, **dadurch** gekennzeichnet, daß die Lochscheibe (54) eine Fase (58) am Außenumfang ihrer dem Kopf (16) abgewandten Stirnseite aufweist, und daß die Abdeckkappe (56) die Fase (58) hintergreifend radial nach innen umgebördelt ist.
